# FASCICULE DE BREVET EUROPEEN

(11) **EP 0 894 643 B1**
(45) Date de publication et mention de la délivrance du brevet: **17.09.2003**
(21) Numéro de dépôt: 98401900.0
(22) Date de dépôt: 24.07.1998
(51) Int. Cl.: B42C 7/00, B29C 65/00

(54) **Assemblage par soudure emprisonnant un matériau non soudable**
Geschweisster Zusammenbau mit einem nicht-schweissbaren Material
Welded assembly containing a non-weldable material

(30) Priorité: 30.07.1997 FR 9709722; 19.12.1997 FR 9716182
(43) Date de publication de la demande: 03.02.1999
(73) Titulaire: Avery Dennison France, 93420 Villepinte (FR)
(72) Inventeur: Mailleuchet, Michel, 10440 La Rivière de Corps (FR)
(74) Mandataire: Derambure, Christian

(56) Documents cités:
- EP-A- 0 847 873
- CH-A- 342 200
- DE-A- 4 428 938
- FR-A- 2 351 800

## Description

L'invention se rapporte au domaine technique de la fabrication de fournitures de bureau telles que des protège-documents.

On connaît déjà dans l'art antérieur des protège-documents comprenant :
- une feuille de matière plastique telle que du polypropylène formant couverture pour le protège-documents et comportant généralement deux lignes de refoulage, rainage ou rainurage définissant le dos du protège-documents ;
- une pluralité de pochettes en matériau plastique tel que du polypropylène, ces pochettes étant ouvertes du côté de la tête, c'est-à-dire de la tranche supérieure du protège-documents, et étant fermées, généralement, sur la tranche latérale et la tranche inférieure du protège-document.

Ces pochettes sont assemblées entre elles et associées à la couverture, de manière conventionnelle, par une ligne de soudage aux ultrasons s'étendant sur au moins une partie de la longueur du dos du protège-documents.

Les protège-documents connus de l'art antérieur, du type présenté ci-dessus, présentent certains inconvénients.

Les sensations de toucher perçues par l'utilisateur de tels produits réalisés entièrement en polymère tel que du polypropylène ne sont pas agréables.

Le coût de fabrication de produits tout PVC est élevé, en raison notamment du coût des matières premières.

L'invention se rapporte à un procédé de fabrication de fournitures de bureau telles que des protège-documents ne présentant pas les inconvénients des produits connus dans l'art antérieur, l'assemblage des différents éléments formant ces fournitures de bureau étant toujours au moins en partie obtenu par soudage ultra sonore ou par procédé haute fréquence.

Le document FR 2 351 800 décrit un procédé de réalisation d'un dossier suspendu comportant un élément de signalisation sur l'un de ses volets.

L'élément de signalisation possède la forme d'un U comportant deux ailes destinées à être placées de part et d'autre d'une zone du volet. Le volet comporte des ouvertures dans la dite zone, ces ouvertures étant recouvertes par les ailes de l'élément de signalisation.

Par soudage ultrasonique, on fait fondre la matière des deux ailes de l'élément de signalisation, la dite matière migrant ainsi à travers les ouvertures du volet, assurant la solidarisation de l'élément de signalisation au volet.

Le document DE 44 28 938 décrit un procédé similaire de solidarisation de deux matériaux non soudables.

Selon un premier aspect, l'invention concerne un procédé de fabrication de fournitures de bureau telles que des protège-documents, ces fournitures comportant au moins une première feuille en matériau plastique et une deuxième feuille en matériau plastique, la première feuille et la deuxième feuille étant réalisées en des matériaux différents, le procédé étant caractérisé en ce qu'il comprend les étapes suivantes :
- on solidarise une première bande de liaison à l'une des deux feuilles, par l'intermédiaire d'une deuxième bande de liaison soudée à la dite feuille ;
- on soude la premiére bande de liaison à l'autre des deux feuilles.

La première feuille en matériau plastique ou cellulosique (l'option "cellulosique" ne faisant pas partie de l'invention) et la deuxième feuille en matériau plastique sont formées de matières non soudables entre elles.

La première feuille en matériau plastique ou cellulosique est réalisée en une matière choisie parmi le groupe comprenant le carton, le papier, le bois, les matières textiles tissées ou non tissées, les polyesters, le polypropylène, le polyéthylène, le polychlorure de vinyle ou des produits analogues.

La deuxième feuille en matériau plastique est réalisée en une matière choisie parmi le groupe comprenant le polypropylène, le polychlorure de vinyle ou des produits analogues.

La première bande de liaison est réalisée en un matériau identique à celui formant la feuille à laquelle elle est soudée ; la deuxième bande de liaison est réalisée en un matériau identique à celui formant la feuille à laquelle elle est soudée.

Dans un mode de réalisation, le procédé comprend une étape de perçage de la première bande de liaison de sorte à former au moins une ouverture dans cette première bande de liaison.

La deuxième feuille en matériau plastique est appliquée contre une face de la première bande de liaison, de sorte à recouvrir au moins partiellement la ou les ouvertures réalisées lors du perçage ; la deuxième bande de liaison est placée en contact avec la première bande de liaison sur la face opposée à celle supportant la deuxième feuille en matériau plastique, et vient recouvrir au moins partiellement la ou les ouvertures (21) réalisées lors du perçage.

La matière formant la deuxième feuille en matériau plastique appliquée contre la première bande de liaison est ramollie par application d'ultrasons ou par un procédé haute fréquence et migre au travers de la ou des ouvertures réalisées lors du perçage.

La deuxième bande de liaison est placée en contact avec la première bande de liaison avant application de la deuxième feuille contre la première bande de liaison, ou pendant le ramollissement de la deuxième feuille, ou après ce ramollissement, la deuxième feuille et la deuxième bande de liaison étant alors soumises aux ultrasons ou à une haute fréquence pour assurer leur soudage.

Dans un autre mode de réalisation, la deuxième bande de liaison est soudée à la première feuille de façon à emprisonner la première bande de liaison entre la dite première feuille et la dite deuxième bande de liaison, formant ainsi une structure tricouche comprenant d'un bord à l'autre la première feuille de matière plastique ou cellulosique, la première bande de liaison, et la deuxième bande de liaison.

La deuxième feuille de matière plastique est soudée à la première bande de liaison, par soudage ultra sonore, ce soudage entraînant au préalable la destruction locale de la deuxième bande de liaison, dans les zones de soudage.

Selon un deuxième aspect, l'invention concerne un protège-documents susceptible d'être élaboré en mettant en oeuvre le procédé tel qu'il vient d'être décrit. Le protège-documents comporte d'une part une couverture formée à partir de la première feuille en matière plastique ou cellulosique et comprenant un dos, et d'autre part au moins une pochette formée à partir de la deuxième feuille en matière plastique.

Selon l'invention, le protège-documents comporte deux bandes de liaison permettant l'assemblage de la dite pochette à la dite couverture.

Selon une réalisation, les pochettes sont formées à partir de la deuxième feuille et de la deuxième bande de liaison, celles-ci étant soudées l'une à l'autre en des points correspondant aux trous prévus dans la première bande de liaison, la dite première bande de liaison formant ainsi bande intermédiaire de solidarisation des dites pochettes par paires.

Selon une autre réalisation, la première bande de liaison est disposée contre la face interne de la couverture et maintenue en position par la deuxième bande de liaison, formant bande de maintien, la dite deuxième bande de liaison permettant l'association, par soudage ultrasonore, des pochettes à la couverture, la soudure entre la première bande de liaison et les pochettes étant obtenue après destruction locale de la deuxième bande de liaison, dans les zones de soudure prédéterminées.

D'autres objets et avantages de l'invention apparaîtront plus clairement au cours de la description suivante de modes de réalisation, description qui va être faite en se référant aux dessins annexés dans lesquels :
- les figures 1 à 4 illustrent le principe d'assemblage mis en oeuvre dans l'invention ;
- la figure 5 est une vue en perspective d'un protège-documents obtenu en mettant en oeuvre le procédé représenté en figures 1 à 4 ;
- les figures 6 et 7 illustrent le principe d'assemblage selon l'invention, dans d'autres modes de réalisation ;

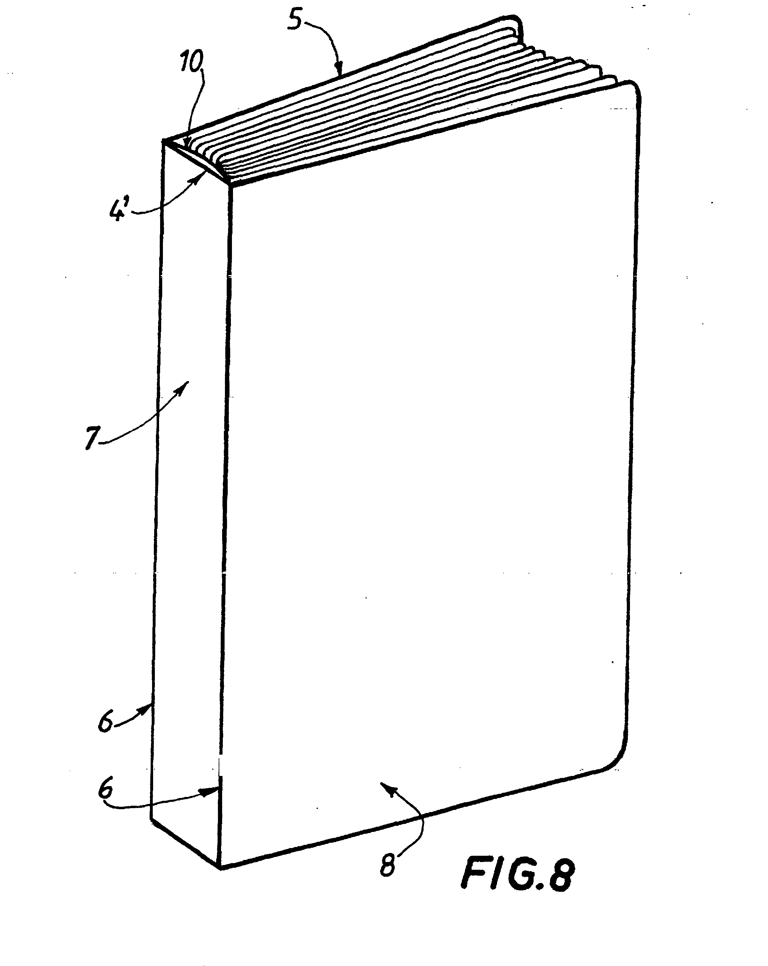

- la figure 8 est une vue en perspective d'un protège-documents obtenu en mettant en oeuvre le procédé représenté en figure 6 ;
- la figure 9 est une vue partielle de dessus d'une paire de pochettes d'un porte-document, élaborée selon un mode de réalisation de l'invention ;
- la figure 10 est une vue schématique selon la ligne X-X de la figure 9, les épaisseurs des différentes feuilles étant très agrandies afin de clarté ;
- la figure 11 est une vue partielle de dessus d'un protège-document, ouvert et posé à plat, comportant une pluralité de paires de pochettes telles que représentées en figure 9.

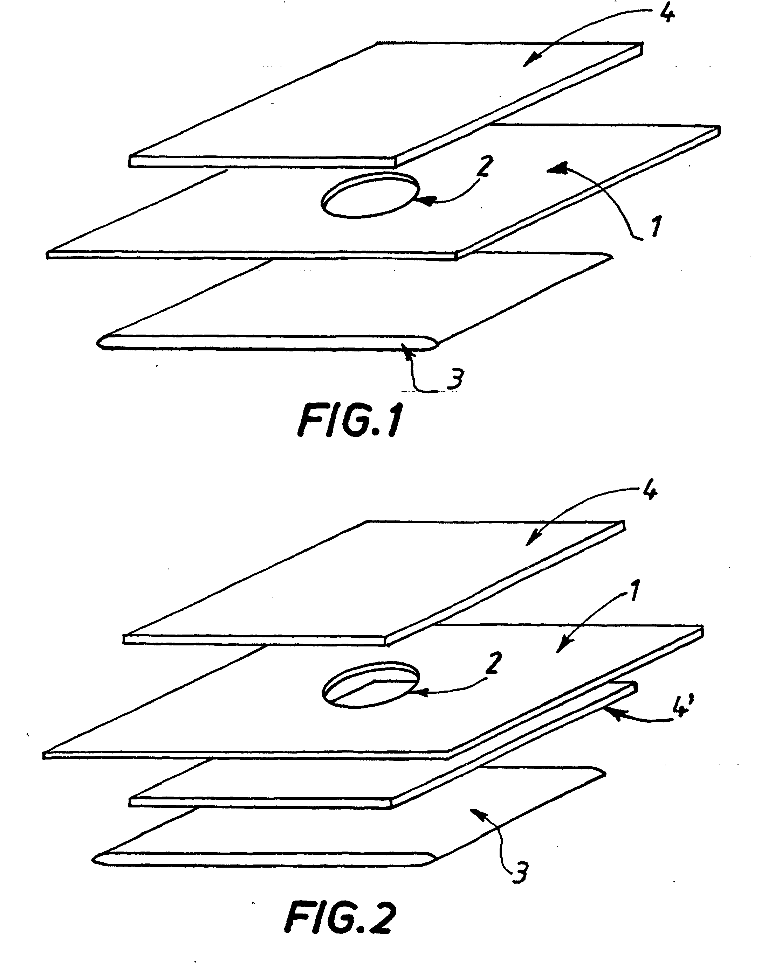

L'on se rapporte tout d'abord aux figures 1 à 4 qui illustrent le principe d'assemblage mis en oeuvre dans l'invention. Ce premier mode de réalisation ne fait pas partie de l'invention, mais appartient à l'état de la technique. Les figures 1 à 4 permettent ainsi de mieux comprendre l'invention.

Une première feuille en matière plastique ou cellulosique 1 comporte au moins une ouverture 2 obtenue par perçage ou tout autre procédé équivalent.

Cette première feuille en matière plastique ou cellulosique 1 est réalisée en une matière choisie parmi le groupe comprenant le carton, le papier, le bois, les matières textiles tissées ou non tissées, les polyesters, le polypropylène, le polyéthylène, le polychlorure de vinyle ou tout autre produit analogue.

Une deuxième feuille en matière plastique 3 doit être assemblée à la première feuille en matière plastique ou cellulosique 1.

Selon l'invention, cet assemblage est obtenu en mettant en oeuvre le soudage par ultrasons ou par un procédé haute fréquence, ou thermique ou tout autre procédé de soudure.

Toutefois, la première feuille en matière plastique ou cellulosique 1 et la deuxième feuille en matière plastique 3 peuvent être formées de matériaux non soudables entre eux.

La deuxième feuille en matière plastique 3 est réalisée en une matière choisie parmi le groupe comprenant le polypropylène, le polychlorure de vinyle, ou des produits analogues.

Les matières choisies pour réaliser la première feuille 1 et la deuxième feuille 3 sont différentes.

Une bande de liaison 4, réalisée en un matériau identique à celui formant la deuxième feuille 3, est appliquée contre une face de la première feuille 1 de sorte à recouvrir au moins partiellement le trou 2.

La matière formant la bande de liaison 4, appliquée contre la première feuille 1, est ramollie par application d'ultrasons et migre au travers du trou 2.

Lorsque la première feuille et la bande de liaison 4 sont en PVC, le soudage de ces deux éléments 1, 4 peut être obtenu par un procédé haute fréquence.

La deuxième feuille de matière plastique 3 est placée en contact avec la première feuille en matériau plastique ou cellulosique 1 sur la face opposée à celle supportant la bande de liaison 4, et vient recouvrir au moins partiellement le trou 2.

La deuxième feuille de matière plastique 3 peut être placée en contact avec la première feuille percée 1 avant application de la bande de liaison 4 contre la première feuille 1.

Dans un autre mode de réalisation, la deuxième feuille de matière plastique 3 est placée en contact avec la première feuille percée 1, pendant le ramollissement de la bande de liaison 4 appliquée sur la première feuille 1.

Dans un autre mode de réalisation, la deuxième feuille de matière plastique 3 est placée en contact avec la première feuille percée 1 après un premier ramollissement de la bande de liaison 4 appliquée sur la première feuille 1, la bande de liaison 4 et la deuxième feuille de matière plastique 3 étant alors soumises aux ultrasons pour assurer leur solidarisation.

Dans chacun des trois cas ci-dessus, le ramollissement du matériau constituant la bande de liaison 4 et sa migration dans le trou 2 assure la solidarisation par soudage ultra sonore ou par haute fréquence de la bande de liaison 4 et de la deuxième feuille de matière plastique 3, dans la zone de soudage définie par le trou 2.

Le matériau formant la deuxième feuille de matière plastique peut également être ramolli lors du soudage et migrer au travers du trou 2 vers la matière ramollie de la bande de liaison 4.

Ce qui solidarise donc, par le biais d'un soudage ultra sonore ou par haute fréquence, la première feuille de matière plastique ou cellulosique 1 à la deuxième feuille de matière plastique 3.

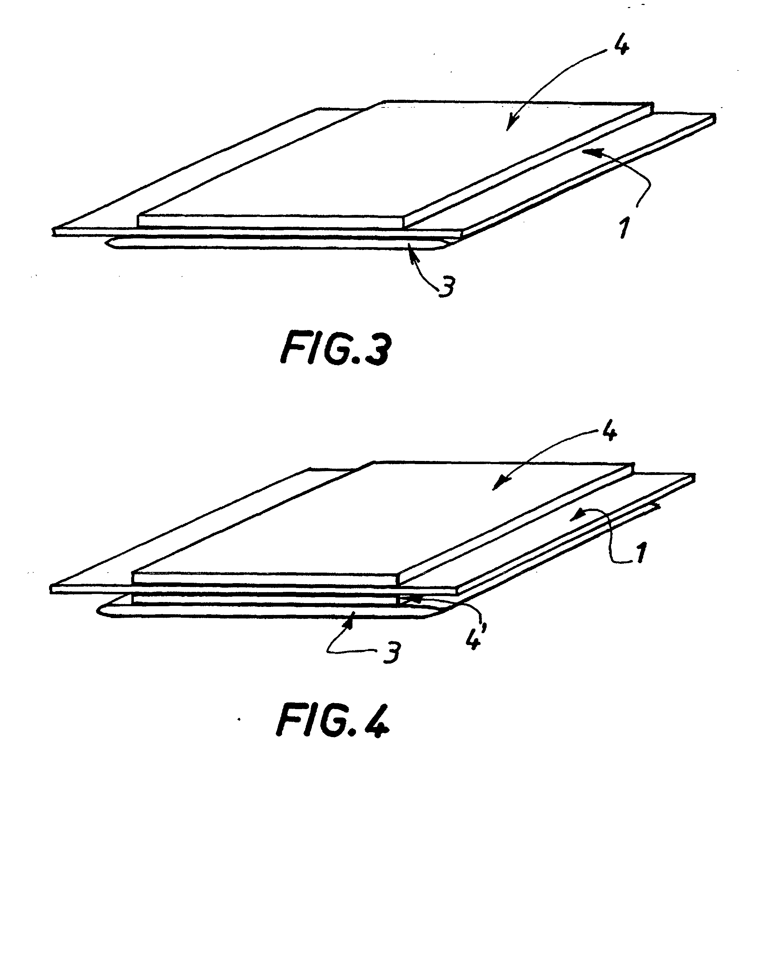

Le cas échéant, comme représenté en figure 2 et 4, une deuxième bande de liaison 4', sensiblement identique à la première bande de liaison 4 peut être disposée entre la première feuille de matière plastique ou cellulosique 1 et la deuxième feuille de matière plastique 3.

De sorte que, dans ce mode de réalisation, la migration du matériau constituant tant la première bande de liaison 4 que la seconde bande de liaison 4' assure la solidarisation par soudage ultra sonore ou haute fréquence de l'ensemble des quatre bandes de matière 1, 3, 4, 4'.

La zone de soudage, définie par le perçage de la première feuille de matière plastique ou cellulosique 1 peut être chauffée, le cas échéant, par convection, conduction ou rayonnement de sorte à accentuer le ramollissement de la ou des bandes de liaison 4, 4' lors du soudage par ultrasons ou haute fréquence de cette ou de ces bandes.

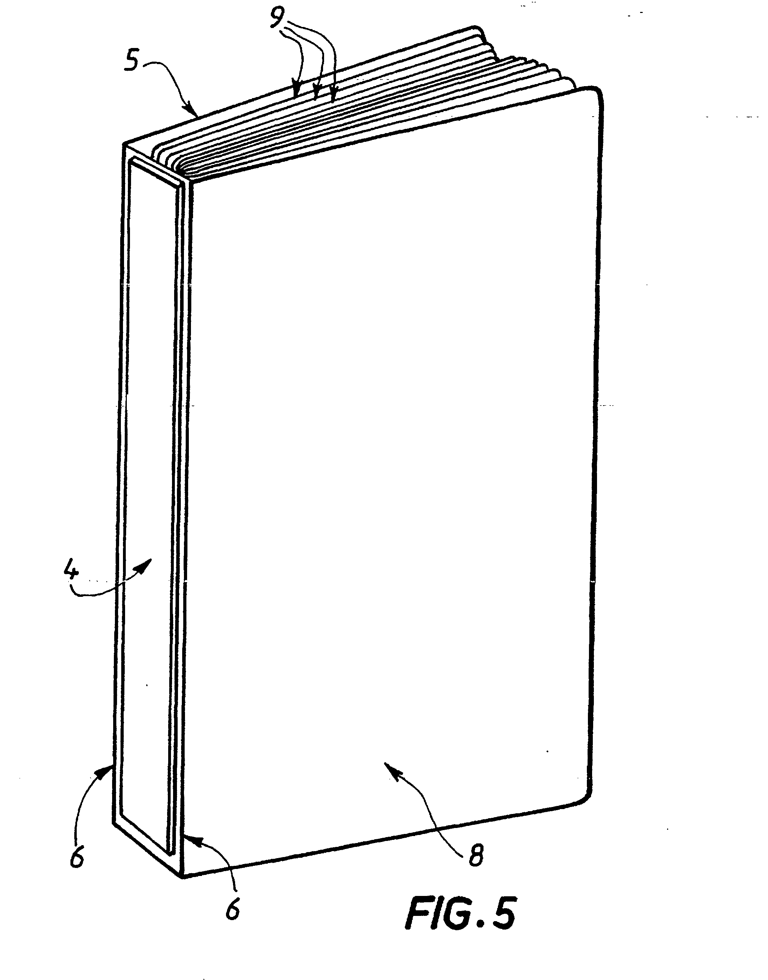

La figure 5 représente un protège-documents obtenu en mettant en oeuvre le procédé venant d'être décrit en référence aux figures 1 à 4.

Le protège-documents illustré en figure 5 comprend une couverture 5 réalisée à partir d'une première feuille de matière plastique ou cellulosique 1.

Cette couverture 5 comporte des lignes de rainage, refoulage 6 limitant le dos 7 du protège-documents par rapport aux plats 8.

Une pluralité de trous 2 ont été réalisés dans la couverture 5, dans la surface correspondant au dos 7 de cette couverture 5.

Une bande de liaison 4 a été disposée sur le dos 7, recouvrant les trous 2.

Le protège-documents comporte une pluralité de pochettes 9 en matière plastique.

La constitution de ces pochettes 9 est connue dans l'art antérieur et sera décrite succinctement ci-après.

Une bande de matériau polymère 3 est découpée, pliée et soudée pour former les pochettes 9 qui comportent une ouverture et dont les contours sont définis par des lignes de soudage.

Des paires de pochettes sont empilées pour former un ensemble de feuilles de matière plastique 3.

Les paires de pochettes peuvent être formées à partir d'une seule feuille de matière plastique 3, soudée, par exemple par ultrasons ou par haute fréquence.

Les paires de pochettes peuvent, dans un autre mode de réalisation, être formées à partir de deux pochettes, élaborées séparément par soudure de feuilles repliées sur elles-mêmes, un élément intermédiaire étant soudé sur chaque pochette pour lier ces deux pochettes entre elles dans un emplacement correspondant au droit du dos de la couverture du protège-documents.

L'ensemble des pochettes 9, correspondant à la feuille 3 des figures 1 à 4, est soudé par ultrasons ou par haute fréquence à la couverture percée 5, par ramollissement du matériau formant la bande 4, migration de ce matériau au travers des trous 2 et soudage entre le matériau de la bande 4 et le matériau des pochettes 9.

Le matériau formant les pochettes 9 peut également être ramolli lors du soudage et migrer au travers des trous 2 vers la matière ramollie de la bande de liaison 4.

Au moins une ligne de soudage formant reliure pour le protège-documents sépare alors les paires de pochettes 9 et associe l'ensemble des pochettes à la face interne de la couverture 5.

Les trous 2 définissant les zones de soudage et la ou les lignes de soudage des pochettes 9 à la couverture 5 sont de dimensions, de forme et de répartition adaptées au nombre de pochettes 9 à souder, aux types de matériaux utilisés ainsi qu'aux conditions d'application des ultrasons, notamment.

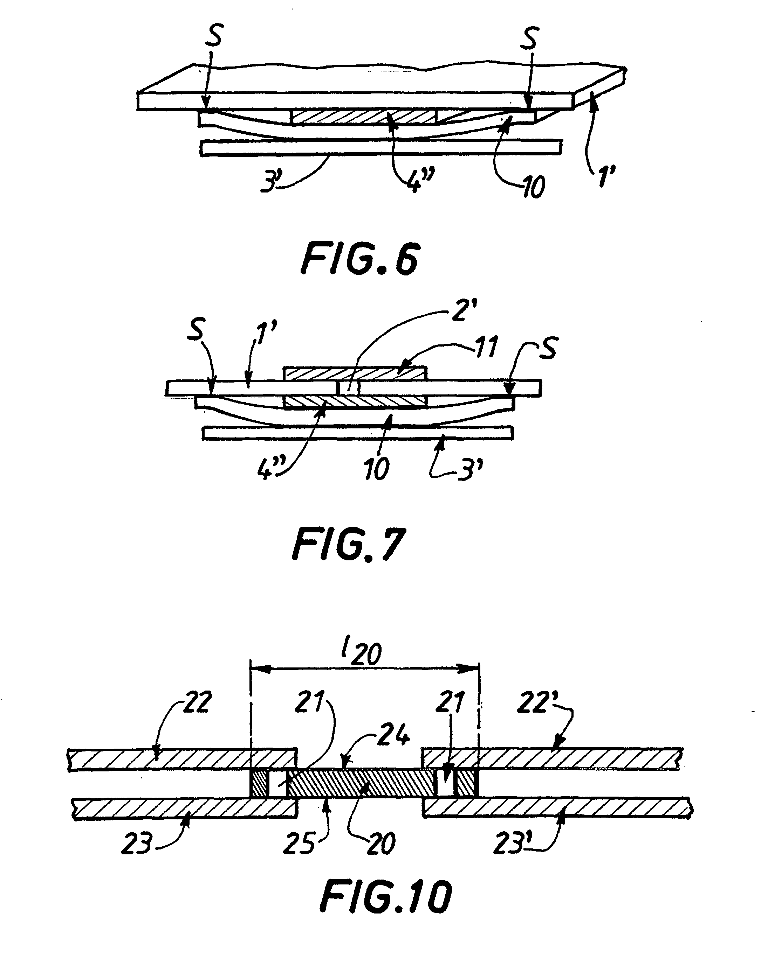

L'on se rapporte maintenant à la figure 6 qui illustre le principe d'assemblage mis en oeuvre dans l'invention, selon un deuxième mode de réalisation.

Une première feuille en matière plastique 1', telle que du polychlorure de vinyle comporte, appliquée sur sa face interne, une première bande de liaison 4" en matière plastique telle que du polypropylène.

Le matériau formant la première bande de liaison 4"peut ne pas être soudable par ultrasons au matériau formant la première feuille en matière plastique 1'.

Une deuxième bande de liaison 10, formant bande de maintien 10, vient recouvrir, au moins partiellement, la première bande de liaison 4" qui se trouve ainsi prise en sandwich entre la bande de maintien 10 et la première feuille 1'.

La bande de maintien 10 est associée rigidement, par soudage ou tout autre procédé à la première feuille 1', par exemple dans les zones S.

Dans un mode de réalisation, la bande de maintien est réallsée dans le même matériau que la première feuille 1'.

Une deuxième feuille en matière plastique 3' doit être assemblée à la première feuille en matière plastique 1'.

Selon l'invention, cet assemblage est obtenu en mettant en oeuvre le soudage par ultrasons ou un procédé haute fréquence.

Toutefois, la première feuille en matière plastique 1' et la deuxième feuille en matière plastique 3' peuvent être formées de matériaux non soudables entre eux.

La deuxième feuille en matière plastique 3' est plaquée contre la bande de maintien 10, au moins dans les zones ou le soudage est désiré.

L'application d'ultrasons conduit à la destruction de la bande de maintien 10, dans les zones de soudage P définies par la sonotrode et l'enclume.

Puis, le matériau constituant la première bande de liaison 4", ramolli par l'effet des ultrasons, vient se souder au matériau formant la deuxième feuille de matière plastique 3'.

Le matériau formant la deuxième feuille de matière plastique 3' peut être ramolli lors du soudage, par contact avec le matériau de la première bande 4" et/ou par l'effet des ultrasons.

La zone de soudage peut être chauffée, le cas échéant, par convection, conduction ou rayonnement, de sorte à accentuer le ramollissement de la première bande de liaison 4" lors du soudage par ultrasons.

Dans le mode de réalisation représenté en figure 7, la première bande de liaison 4" est non seulement maintenue en position par la deuxième bande de liaison 10, formant bande de maintien, mais est soudée, au travers de trous 2' de la première feuille 1', à une troisième bande 11.

Le soudage des bandes 4", 11 peut être réalisé par ultrasons de la même manière que celle exposée ci-dessus en référence aux figures 2 et 4.

Un protège-documents peut être obtenu en mettant en oeuvre le procédé décrit en référence aux figures 6 et 7.

La couverture 5' de ce protège-documents est élaborée à partir d'une première feuille de matière plastique 1'.

Ce protège-documents comporte une pluralité de pochettes en matière plastique, élaborées comme décrit auparavant, à partir d'une seconde feuille de matière plastique 3'.

L'ensemble des pochettes 9', correspondant à la feuille 3' des figures 6 et 7 est soudée par ultrasons à la couverture 5', par destruction localisée de la bande de maintien 10, ramollissement du matériau de la première bande 4" et du matériau constituant les pochettes 9'.

Au moins une ligne de soudage formant reliure pour le protège-documents sépare les paires de pochettes 9' et associe l'ensemble des pochettes à la face interne de la couverture 5'.

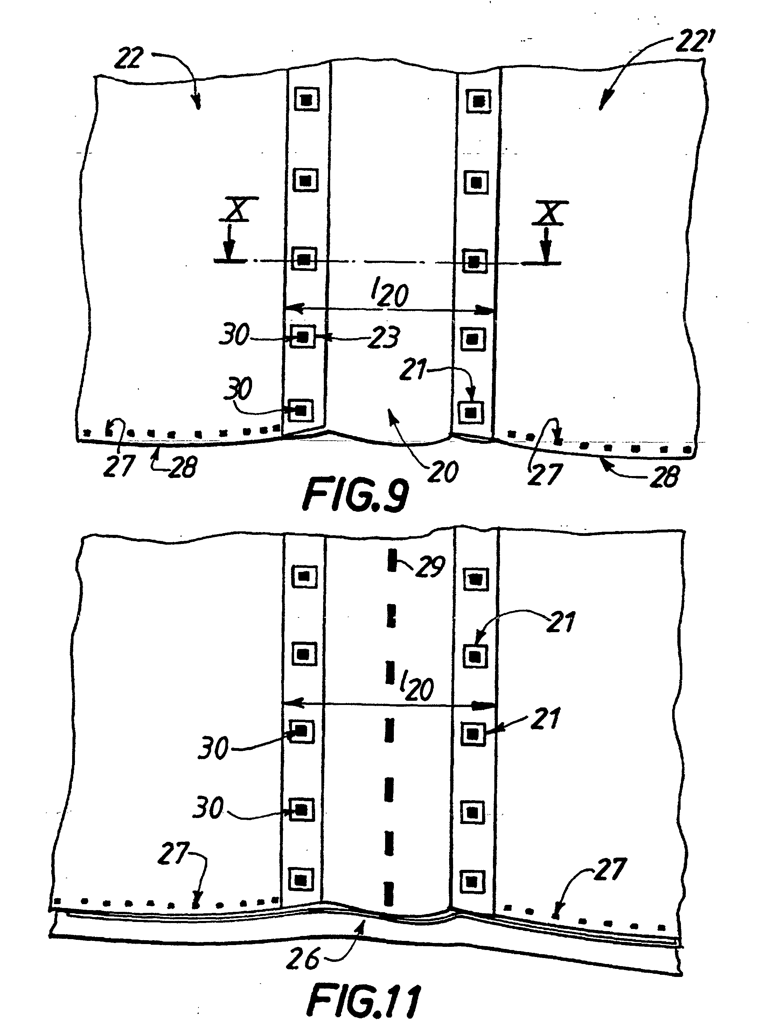

L'on se rapporte maintenant à la figure 9 qui illustre un autre mode de réalisation de l'assemblage selon l'invention.

Une première bande de liaison en matière plastique ou cellulosique 20 comporte au moins une ouverture 21 obtenue par perçage ou tout autre procédé équivalent.

Cette première bande de liaison en matière plastique ou cellulosique 20 est réalisée en une matière choisie parmi le groupe comprenant le carton, le papier, le bois, les matières textiles tissées ou non tissées, les polyesters, le polypropylène, le polyéthylène, le polychlorure de vinyle ou tout autre produit analogue.

Une première feuille en matière plastique ou cellulosique, non représentée sur la figure 10, telle qu'une couverture 26 de protège-documents, doit être assemblée à une deuxième feuille en matière plastique 22, 22'.

Selon l'invention, cet assemblage est obtenu en mettant en oeuvre le soudage par ultrasons ou par un procédé haute fréquence ou thermique ou tout autre procédé.

Toutefois, la première feuille en matière plastique ou cellulosique et la deuxième feuille en matière plastique peuvent être formées en matériaux non soudables entre eux.

La deuxième feuille en matière plastique 22, 22' est réalisée en une matière choisie parmi le groupe comprenant le polypropylène, le polychlorure de vinyle ou des produits analogues.

Les matières choisies pour réaliser la première feuille et la deuxième feuille sont différentes.

L'assemblage de la deuxième feuille 22, 22' à la première feuille 26 est effectué via une première bande de liaison, en matière plastique ou cellulosique 20. La première bande de liaison 20 est réalisée en une matière soudable à la première feuille, mais non soudable à la deuxième feuille 22, 22'.

Une deuxième bande de liaison 23, 23', en matériau identique à celui formant la deuxième feuille 22, 22' est appliquée contre une face de la première bande de liaison 20 de sorte à recouvrir au moins partiellement les trous 21.

La matière de cette deuxième bande de liaison 23, 23', appliquée contre la première bande de liaison 20 est ramollie par application d'ultrasons ou soudure haute fréquence ou thermique ou tout autre procédé de soudure, et migre au travers du trou 21.

Cette deuxième bande de liaison 23, 23' permet donc de lier la première bande de liaison 20 et la deuxième feuille22, 22'.

L'homme du métier comprendra que la deuxième feuille 22, 22' peut, tout aussi bien, être vue comme bande de liaison entre la première bande de liaison 20 et la deuxième bande de liaison 23, 23', la deuxième bande de liaison 23, 23' pouvant être vue comme une feuille.

La deuxième feuille en matière plastique 22, 22' est placée en contact avec la première bande de liaison en matière plastique ou cellulosique 20 sur la face 24 opposée à celle du support 25 supportant la deuxième bande de liaison 23, 23', et vient recouvrir au moins partiellement les trous 21.

Dans le mode de réalisation représenté en figures 9 à 11, les trous 21 sont de section sensiblement carrée, cette forme n'étant pas exclusive d'autres, les trous pouvant être ronds ou de tout autre forme.

La première bande de liaison 20 se présente sous forme d'une bande de largeur I₂₀ correspondant sensiblement à la largeur du dos d'un protège-document tel que partiellement représenté en figure 11.

Ce protège-document comprend une couverture 26 (premiére feuille) comportant des lignes de rainage, refoulage limitant le dos du protège-document par rapport aux plats.

Ce protège-document comporte une pluralité de pochettes en matière plastique.

La constitution de ces pochettes est connue dans l'art antérieur ainsi qu'il a été dit précédemment.

Une bande de matériau polymère est découpée, pliée et soudée pour former ces pochettes qui comportent une ouverture et dont les contours sont définis par des lignes de soudage.

Dans le mode de réalisation représenté aux figures 9 à 11, les pochettes sont formées des deuxièmes feuilles 22, 22' et des deuxièmes bandes de liaison 23, 23', soudées selon des lignes de soudage latérales et inférieures 27.

Les paires de pochettes peuvent, dans un autre mode de réalisation, être formées à partir de deux pochettes élaborées séparément par soudure de feuilles repliées sur elles-mêmes, sur leur bord inférieur 28.

L'ensemble formé par une paire de pochettes assemblées, de la manière décrite ci-dessus, au moyen de la première bande de liaison 20 formant élément intermédiaire, peut être soudé à la couverture 26 (première feuille) du protège-document par ultrasons, haute fréquence ou tout autre procédé.

Dans le mode de réalisation représenté en figure 11, une ligne de soudage 29 formant reliure pour le protège-document sépare les paires de pochettes et associe l'ensemble des pochettes à la face interne de la couverture 26.

La référence 30, sur les figures 9 à 11, correspond à la zone de soudage de la deuxième feuille 22, 22' à la deuxième bande de liaison 23, 23', dans une zone de soudage définie par les trous 21 formés dans la première bande de liaison en matière plastique ou cellulosique 20.

Les trous 21 définissant ces zones de soudage et la ou les lignes de soudage des paires de pochettes à la couverture 26 sont de dimensions, de forme et répartition adaptées au nombre des pochettes à souder, au type de matériau utilisé ainsi qu'aux conditions d'application des ultrasons, notamment.

Les paramètres de soudure par ultrasons utilisés peuvent être les suivants :
- temps de soudage : 1,5 secondes ;
- temps de refroidissement sous pression : 1 seconde ;
- pression : 3 bars ;
- fréquence utilisée : 20 KHZ ;
- outillage : sonotrode à dents (pas de 1'')
pour l'élaboration d'un produit analogue à celui représenté en figure 5.

Ces paramètres ne sont qu'indicatifs et dépendent bien évidemment des matériaux employés, de leurs épaisseurs notamment.

Les fournitures de bureau élaborées selon l'invention ne sont pas limitées aux protège-documents tels qu'ils viennent d'être décrits.

Toute autre fourniture de bureau élaborée en mettant en oeuvre le procédé d'assemblage selon l'invention, et notamment les modes de réalisation décrits en référence aux figures 1 à 4, 6, 7 et 10 rentre dans le cadre de la présente invention.

## Revendications

1. Procédé de fabrication de fournitures de bureau telles que des protège-documents, ces fournitures comportant au moins une première feuille en matériau plastique (1',26) et une deuxième feuille (3', 22, 22') en matériau plastique, la première feuille (1',26) et la deuxième feuille (3', 22, 22') étant réalisées en des matériaux différents, le procédé étant **caractérisé en ce qu'**il comprend les étapes suivantes :
- on solidarise une première bande de liaison (4", 20) à l'une des deux feuilles (1', 22, 22'), par l'intermédiaire d'une deuxième bande de liaison (10, 23, 23') soudée à la dite feuille (1', 22, 22') ;
- on soude la première bande de liaison (4", 20) à l'autre des deux feuilles (3',26).

2. Procédé selon la revendication 1, **caractérisé en ce que** la première feuille en matériau plastique (1') et la deuxième feuille en matériau plastique (3', 22, 22') sont formées de matières non soudables entre elles.

3. Procédé selon la revendication 1 ou 2, **caractérisé en ce que** la première feuille en matériau plastique (1') est réalisée en une matière choisie parmi le groupe comprenant les polyesters, le polypropylène, le polyéthylène, le polychlorure de vinyle ou des produits analogues.

4. Procédé selon l'une quelconque des revendications 1 à 3, **caractérisé en ce que** la deuxième feuille en matériau plastique (3', 22, 22') est réalisée en une matière choisie parmi le groupe comprenant le polypropylène, le polychlorure de vinyle ou des produits analogues.

5. Procédé selon l'une quelconque des revendications 1 à 3, **caractérisé en ce que** la première bande de liaison (4", 20) est réalisée en un matériau identique à celui formant la feuille (3') à laquelle elle est soudée.

6. Procédé selon l'une quelconque des revendications 1 à 5, **caractérisé en ce que** la deuxième bande de liaison (10, 23, 23') est réalisée en un matériau identique à celui formant la feuille (1', 22, 22') à laquelle elle est soudée.

7. Procédé selon l'une quelconque des revendications 1 à 6, **caractérisé en ce qu'**il comprend une étape de perçage de la première bande de liaison (20) de sorte à former au moins une ouverture (21) dans cette première bande de liaison (20).

8. Procédé selon la revendication 7, **caractérisé en ce que** la deuxième feuille en matériau plastique (22, 22') est appliquée contre une face (24) de la première bande de liaison (20), de sorte à recouvrir au moins partiellement la ou les ouvertures (21) réalisées lors du perçage.

9. Procédé selon la revendication 8, **caractérisé en ce que** la matière formant la deuxième feuille en matériau plastique (22, 22') appliquée contre la première bande de liaison (20) est ramollie par application d'ultrasons ou par un procédé haute fréquence et migre au travers de la ou des ouvertures réalisées lors du perçage.

10. Procédé selon la revendication 8 ou 9, **caractérisé en ce que** la deuxième bande de liaison (23, 23') est placée en contact avec la première bande de liaison (20), sur la face opposée (25) à celle (24) supportant la deuxième feuille en matériau plastique (22, 22'), et vient recouvrir au moins partiellement la ou les ouvertures (21) réalisées lors du perçage.

11. Procédé selon la revendication 10, **caractérisé en ce que** la deuxième bande de liaison (23, 23') est placée en contact avec la première bande de liaison (20) avant application de la deuxième feuille (22, 22') contre la première bande de liaison (20), la matière formant la deuxième bande de liaison (23, 23') étant ainsi également ramollie par l'application d'ultrasons ou par le procédé haute fréquence et migrant au travers de la ou des ouvertures réalisées lors du perçage, de sorte que la deuxième feuille (22, 22') et la deuxième bande de liaison (23, 23') sont soudées.

12. Procédé selon la revendication 10, **caractérisé en ce que** la deuxième bande de liaison (23, 23') est placée en contact avec la première bande de liaison (20) pendant le ramollissement de la deuxième feuille (22, 22') appliquée contre la première bande de liaison (20), de sorte que la deuxième feuille (22, 22') et la deuxième bande de liaison (23, 23') sont soudées.

13. Procédé selon la revendication 10, **caractérisé en ce que** la deuxième bande de liaison (23, 23') est placée en contact avec la première bande de liaison (20) après le ramollissement de la deuxième feuille (22, 22') appliquée contre la première bande de liaison (20), la deuxième feuille (22, 22') et la deuxième bande de liaison (23, 23') étant soumises aux ultrasons ou à une haute fréquence pour assurer leur soudage.

14. Procédé selon l'une quelconque des revendications 11 à 13, **caractérisé en ce que** la zone de soudage, définie par le perçage de la première bande de liaison (20) est chauffée par convection, conduction ou rayonnement, de sorte à accentuer le ramollissement de la deuxième feuille (22, 22') lors de son soudage à la deuxième bande de liaison (23, 23').

15. Procédé selon l'une quelconque des revendications 1 à 6, **caractérisé en ce que** la deuxième bande de liaison (10) est soudée à la première feuille (1') de façon à emprisonner la première bande de liaison (4") entre la dite première feuille (1') et la dite deuxième bande de liaison (10), formant ainsi une structure tricouche comprenant d'un bord à l'autre la première feuille de matière plastique ou cellulosique (1'), la première bande de liaison (4"), et la deuxième bande de liaison (10).

16. Procédé selon la revendication 15, **caractérisé en ce que** la deuxième bande de liaison est réalisée en polychlorure de vinyle.

17. Procédé selon la revendication 16, **caractérisé en ce que** la deuxième feuille (3') de matière plastique est soudée à la première bande de liaison (4"), par soudage ultra sonore, ce soudage entraînant au préalable la destruction locale de la deuxième bande de liaison (10), dans les zones de soudage.

18. Protège-documents susceptible d'être élaboré en mettant en oeuvre le procédé selon l'une quelconque des revendications précédentes, le dit protège-documents comportant d'une part une couverture (5, 26) formée à partir d'une première feuille en matière plastique et comprenant un dos (7), et d'autre part au moins une pochette (9) formée à partir d'une deuxième feuille en matière plastique, **caractérisé en ce qu'**il comporte deux bandes de liaison (4", 20, 10, 23, 23') permettant l'assemblage de la dite pochette (9) à la dite couverture (5, 26).

19. Protège-documents selon la revendication 18, **caractérisé en ce que** les pochettes (9) sont formées à partir de la deuxième feuille (22, 22') et de la deuxième bande de liaison (23, 23'), la dite deuxième feuille (22, 22') et la dite deuxième bande de liaison (23, 23') étant soudées l'une à l'autre en des points (30) correspondant aux trous (21) prévus dans la première bande de liaison (20), la dite première bande de liaison (20) formant ainsi bande intermédiaire de solidarisation des dites pochettes (9) entre elles, par paires.

20. Protège-documents selon la revendication 19, **caractérisé en ce qu'**il comporte une pluralité de paires de pochettes associées entre elles et fixées à la couverture (26) le long d'une ligne de soudage (29).

21. Protège-documents selon la revendication 19 ou 20, **caractérisé en ce que** les trous (21) prévus dans la première bande de liaison (20) sont disposés sensiblement selon deux lignes parallèles longitudinales, la première bande de liaison (20) étant d'une largeur transversale (I₂₀) sensiblement égale à la largeur du dos du protège-documents.

22. Protège-documents selon la revendication 18, **caractérisé en ce que** la première bande de liaison (4") est disposée contre la face interne de la couverture (5) et maintenue en position par la deuxième bande de liaison (10), formant bande de maintien, la dite deuxième bande de liaison (10) permettant l'association, par soudage ultrasonore, des pochettes (9) à la couverture (5), la soudure entre la première bande de liaison (4") et les pochettes (9) étant obtenue après destruction locale de la deuxième bande de liaison (10), dans les zones de soudure prédéterminées.

## Patentansprüche

1. Herstellungsverfahren von Bürobedarfsartikeln wie beispielsweise Schutzhüllen, wobei diese Bedarfsartikel mindestens eine erste Kunststofffolie (1', 26) und eine zweite Kunststofffolie (3', 22, 22') umfassen, wobei die erste Folie (1', 26) und die zweite Folie (3', 22, 22') aus unterschiedlichen Materialien bestehen, wobei das Verfahren durch die folgenden Etappen **gekennzeichnet** ist:
- man verbindet einen ersten Verbindungsstreifen (4", 20) über einen zweiten, an der besagten Folie (1', 22, 22') verschweißten Verbindungsstreifen (10, 23, 23') mit einer der beiden Folien (1', 22, 22');
- man verschweißt den ersten Verbindungsstreifen (4", 20) an der anderen der beiden Folien (3', 26).

2. Verfahren nach Anspruch 1, **dadurch gekennzeichnet, dass** die erste Folie aus Kunststoff (1') und die zweite Folie aus Kunststoff (3', 22, 22') aus nicht miteinander verschweißbaren Materialien bestehen.

3. Verfahren nach Anspruch 1 oder 2, **dadurch gekennzeichnet, dass** die erste Folie aus Kunststoff (1') aus einem Material besteht, das aus der Gruppe Polyester, Polypropylen, Polyethylen, Vinylpolychlorid oder dergleichen gewählt wird.

4. Verfahren nach einem der Ansprüche 1 bis 3, **dadurch gekennzeichnet, dass** die zweite Folie aus Kunststoff (3', 22, 22') aus einem Material besteht, das aus der Gruppe Polypropylen, Vinylpolychlorid oder dergleichen gewählt wird.

5. Verfahren nach einem der Ansprüche 1 bis 3, **dadurch gekennzeichnet, dass** der erste Verbindungsstreifen (4", 20) aus dem gleichen Material besteht wie dasjenige der Folie (3'), an der er angeschweißt ist.

6. Verfahren nach einem der Ansprüche 1 bis 5, **dadurch gekennzeichnet, dass** der zweite Verbindungsstreifen (10, 23, 23') aus dem gleichen Material besteht wie dasjenige der Folie (1', 22, 22'), an der er angeschweißt ist.

7. Verfahren nach einem der Ansprüche 1 bis 6, **dadurch gekennzeichnet, dass** es eine Lochetappe des ersten Verbindungssteifens (20) umfasst, um zumindest eine Öffnung (21) in diesem ersten Verbindungsstreifen (20) zu bilden.

8. Verfahren nach Anspruch 7, **dadurch gekennzeichnet, dass** die zweite Folie (22, 22') aus Kunststoff gegen eine Fläche (24) des ersten Verbindungsstreifens (20) gedrückt wird, um die durch die Lochung hergestellte(n) Öffnung(en) (21) zumindest teilweise abzudecken.

9. Verfahren nach Anspruch 8, **dadurch gekennzeichnet, dass** das Material der ersten Folie (22, 22') aus Kunststoff, die gegen den ersten Verbindungsstreifen (20) gedrückt wird, durch Aufbringen von Ultraschall oder durch ein Hochfrequenzverfahren aufgeweicht wird und durch die durch die Lochung hergestellte(n) Öffnung(en) fließt.

10. Verfahren nach Anspruch 8 oder 9, **dadurch gekennzeichnet, dass** der zweite Verbindungsstreifen (23, 23') mit dem ersten Verbindungssteifen (20) in Kontakt versetzt wird, und zwar an der Fläche (25), die derjenigen (24) gegenüberliegt, die die zweite Folie (22, 22') aus Kunststoff trägt, und die durch die Lochung hergestellte(n) Öffnung(en) (21) zumindest teilweise überdeckt.

11. Verfahren nach Anspruch 10, **dadurch gekennzeichnet, dass** der zweite Verbindungsstreifen (23, 23') vor dem Aufbringen der zweiten Folie (22, 22') gegen den ersten Verbindungsstreifen (20) mit dem ersten Verbindungsstreifen (20) in Kontakt versetzt wird, wobei das Material des zweiten Verbindungsstreifens (23, 23') ebenfalls durch Aufbringen von Ultraschall oder durch das Hochfrequenzverfahren aufgeweicht wird und durch die durch die Lochung hergestellte(n) Öffnung(en) fließt, so dass die zweite Folie (22, 22') und der zweite Verbindungsstreifen (23, 23') zusammengeschweißt werden.

12. Verfahren nach Anspruch 10, **dadurch gekennzeichnet, dass** der zweite Verbindungsstreifen (23, 23') während des Erweichens der zweiten, gegen den ersten Verbindungsstreifen (20) gedrückten Folie (22, 22') mit dem ersten Verbindungsstreifen (20) in Kontakt versetzt wird, so dass die zweite Folie (22, 22') und der zweite Verbindungsstreifen (23, 23') zusammengeschweißt werden.

13. Verfahren nach Anspruch 10, **dadurch gekennzeichnet, dass** der zweite Verbindungsstreifen (23, 23') nach dem Erweichen der zweiten, gegen den ersten Verbindungsstreifen (20) gedrückte Folie (22, 22') mit dem ersten Verbindungsstreifen (20) in Kontakt versetzt wird, wobei die zweite Folie (22, 22') und der zweite Verbindungsstreifen (23, 23') Ultraschall oder einer hohen Frequenz ausgesetzt werden, um ihr Verschweißen zu gewährleisten.

14. Verfahren nach einem der Ansprüche 11 bis 13, **dadurch gekennzeichnet, dass** der vom Loch des ersten Verbindungsstreifens (20) definierte Schweißbereich durch Konvektion, Leitung oder Bestrahlung aufgeheizt wird, um das Erweichen der zweiten Folie (22, 22') bei ihrem Verschweißen mit dem zweiten Verbindungsstreifen (23,23') zu fördern.

15. Verfahren nach einem der Ansprüche 1 bis 6, **dadurch gekennzeichnet, dass** der zweite Verbindungssteifen (10) an die erste Folie (1') geschweißt wird, um den ersten Verbindungsstreifen (4") zwischen der besagten ersten Folie (1') und dem besagten zweiten Verbindungsstreifen (10) einzuschließen, wodurch eine dreischichtige Struktur entsteht, die von einem Ende zum anderen die erste Folie (1') aus Kunststoff oder Zellulose, den ersten Verbindungsstreifen (4") und den zweiten Verbindungsstreifen (10) umfasst.

16. Verfahren nach Anspruch 15, **dadurch gekennzeichnet, dass** der zweite Verbindungsstreifen aus Vinylpolychlorid besteht.

17. Verfahren nach Anspruch 16, **dadurch gekennzeichnet, dass** die zweite Folie (3') aus Kunststoff durch Ultraschall-Schweißung an den ersten Verbindungsstreifen (4") geschweißt wird, wobei diese Schweißung zuvor zur lokalen Zerstörung des zweiten Verbindungsstreifens (10) in den Schweißbereichen führt.

18. Schutzhülle, die durch Umsetzung des Verfahrens nach einem der vorangehenden Ansprüche hergestellt werden kann, wobei die besagte Schutzhülle einerseits einen aus einer ersten Kunststofffolie gebildeten Deckel (5, 26) mit einem Rücken (7) und andererseits mindestens eine aus einer zweiten Kunststofffolie gebildete Tasche (9) umfasst, **dadurch gekennzeichnet, dass** sie zwei Verbindungsstreifen (4", 20, 10, 23, 23') aufweist, die das Zusammenfügen der besagten Tasche (9) mit dem besagten Deckel (5, 26) ermöglichen.

19. Schutzhülle nach Anspruch 18, **dadurch gekennzeichnet, dass** die Taschen (9) aus der zweiten Folie (22, 22') und dem zweiten Verbindungsstreifen (23, 23') gebildet werden, wobei die besagte zweite Folie (22, 22') und der besagte zweite Verbindungsstreifen (23, 23') an Punkten (30) miteinander verschweißt sind, die den im ersten Verbindungsstreifen (20) vorgesehenen Löchern (21) entsprechen, wobei der besagte erste Verbindungsstreifen (20) somit einen Zwischenverstärkungsstreifen zwischen den besagten paarweise angeordneten Taschen (9) bildet.

20. Schutzhülle nach Anspruch 19, **dadurch gekennzeichnet, dass** sie eine Mehrzahl von Taschenpaaren aufweist, die miteinander verbunden und entlang einer Schweißlinie (29) am Deckel (26) befestigt sind.

21. Schutzhülle nach Anspruch 19 oder 20, **dadurch gekennzeichnet, dass** die im ersten Verbindungsstreifen (20) vorgesehenen Löcher (21) etwa gemäß zwei parallelen Längslinien angeordnet sind, wobei der erste Verbindungsstreifen (20) eine Querbreite (I₂₀) aufweist, die etwa der Breite des Rückens der Schutzhülle entspricht.

22. Schutzhülle nach Anspruch 18, **dadurch gekennzeichnet, dass** der erste Verbindungsstreifen (4") gegen die Innenfläche des Deckels (5) angeordnet ist und durch den zweiten, einen Festhaltstreifen bildenden Verbindungsstreifen (10) in Position gehalten wird, wobei der besagte zweite Verbindungsstreifen (10) die Zusammenfügung durch Ultraschall-Schweißen der Taschen (9) mit dem Deckel (5) ermöglicht, wobei die Schweißung zwischen dem ersten Verbindungsstreifen (4") und den Taschen (9) nach lokaler Zerstörung des zweiten Verbindungsstreifens (10) in den vorgegebenen Schweißbereichen erhalten wird.

## Claims

1. A method for manufacturing office supplies such as document protectors, these supplies having at least one first sheet made of a plastic material (1', 26) and one second sheet (3', 22, 22') made of a plastic material, the first sheet (1', 26) and the second sheet (3', 22, 22') being produced in different materials, the method being **characterised in that** it comprises the following steps:
- a first connecting strip (4", 20) is firmly attached to one of the two sheets (1', 22, 22'), by means of a second connecting strip (10, 23, 23') welded to said sheet (1', 22, 22');
- the first connecting strip (4", 20) is welded to the other of the two sheets (3', 26).

2. A method according to Claim 1, **characterised in that** the first sheet made of a plastic material (1') and the second sheet made of a plastic material (3', 22, 22') are formed from substances which cannot be welded to one another.

3. A method according to Claim 1 or 2, **characterised in that** the first sheet made of plastic material (1') is produced in a substance chosen from amongst the group comprising polyesters, polypropylene, polyethylene, polyvinyl chloride or similar products.

4. A method according to any one of Claims 1 to 3, **characterised in that** the second sheet made of a plastic material (3', 22, 22') is produced in a substance chosen from amongst the group comprising polypropylene, polyvinyl chloride or similar products.

5. A method according to any one of Claims 1 to 3, **characterised in that** the first connecting strip (4", 20) is produced in a material identical to that forming the sheet (3') to which it is welded.

6. A method according to any one of Claims 1 to 5, **characterised in that** the second connecting strip (10, 23, 23') is produced in a material identical to that forming the sheet (1', 22, 22') to which it is welded.

7. A method according to any one of Claims 1 to 6, **characterised in that** it comprises a step of perforating the first connecting strip (20) so as to form at least one opening (21) in this first connecting strip (20).

8. A method according to Claim 7, **characterised in that** the second sheet made of a plastic material (22, 22') is applied against one face (24) of the first connecting strip (20), so as to cover at least partially the opening or openings (21) produced during perforation.

9. A method according to Claim 8, **characterised in that** the substance forming the second sheet made of a plastic material (22, 22') applied against the first connecting strip (20) is softened by application of ultrasound or by a high-frequency method and migrates through the opening or openings produced during perforation.

10. A method according to Claim 8 or 9, **characterised in that** the second connecting strip (23, 23') is placed in contact with the first connecting strip (20), on the opposite face (25) to the one (24) supporting the second sheet made of a plastic material (22, 22'), and covers at least partially the opening or openings (21) produced during perforation.

11. A method according to Claim 10, **characterised in that** the second connecting strip (23, 23') is placed in contact with the first connecting strip (20) before application of the second sheet (22, 22') against the first connecting strip (20), the substance forming the second connecting strip (23, 23') thus also being softened by the application of ultrasound or by the high-frequency method and migrating through the opening or openings produced during perforation, so that the second sheet (22, 22') and the second connecting strip (23, 23') are welded.

12. A method according to Claim 10, **characterised in that** the second connecting strip (23, 23') is placed in contact with the first connecting strip (20) during the softening of the second sheet (22, 22') applied against the first connecting strip (20), so that the second sheet (22, 22') and the second connecting strip (23, 23') are welded.

13. A method according to Claim 10, **characterised in that** the second connecting strip (23, 23') is placed in contact with the first connecting strip (20) after the softening of the second sheet (22, 22') applied against the first connecting strip (20), the second sheet (22, 22') and the second connecting strip (23, 23') being subjected to ultrasound or a high frequency in order to weld them.

14. A method according to any one of Claims 11 to 13, **characterised in that** the welding area, defined by the perforation of the first connecting strip (20), is heated by convection, conduction or radiation, so as to increase the softening of the second sheet (22, 22') during its welding to the second connecting strip (23, 23').

15. A method according to any one of Claims 1 to 6, **characterised in that** the second connecting strip (10) is welded to the first sheet (1') so as to trap the first connecting strip (4") between said first sheet (1') and said second connecting strip (10), thus forming a three-layer structure comprising, from one side to the other, the first sheet of plastic or cellulose substance (1'), the first connecting strip (4"), and the second connecting strip (10).

16. A method according to Claim 15, **characterised in that** the second connecting strip is produced in polyvinyl chloride.

17. A method according to Claim 16, **characterised in that** the second sheet (3') of plastic substance is welded to the first connecting strip (4"), by ultrasonic welding, this welding first bringing about the local destruction of the second connecting strip (10), in the welding areas.

18. A document protector capable of being manufactured using the method according to any one of the preceding claims, said document protector having on the one hand a cover (5, 26) formed from a first sheet made of a plastic substance and comprising a spine (7), and on the other hand at least one pocket (9) formed from a second sheet made of a plastic substance, **characterised in that** it has two connecting strips (4", 20, 10, 23, 23') allowing the assembly of said pocket (9) with said cover (5, 26).

19. A document protector according to Claim 18, **characterised in that** the pockets (9) are formed from the second sheet (22, 22') and the second connecting strip (23, 23'), said second sheet (22, 22') and said second connecting strip (23, 23') being welded to one another at points (30) corresponding to the holes (21) provided in the first connecting strip (20), said first connecting strip (20) thus forming an intermediate strip for firmly attaching said pockets (9) to one another, in pairs.

20. A document protector according to Claim 19, **characterised in that** it has a plurality of pairs of pockets associated with one another and fixed to the cover (26) along a welding line (29).

21. A document protector according to Claim 19 or 20, **characterised in that** the holes (21) provided in the first connecting strip (20) are disposed substantially in two longitudinal parallel lines, the first connecting strip (20) having a transverse width (I₂₀) substantially equal to the width of the spine of the document protector.

22. A document protector according to Claim 18, **characterised in that** the first connecting strip (4") is disposed against the internal face of the cover (5) and held in position by the second connecting strip (10), forming a holding strip, said second connecting strip (10) allowing the association, by ultrasonic welding, of the pockets (9) with the cover (5), the welding between the first connecting strip (4") and the pockets (9) being obtained after local destruction of the second connecting strip (10), in the predetermined welding areas.
